# EUROPEAN PATENT APPLICATION

(11) **EP 3 643 478 A1**
(43) Date of publication of application: **29.04.2020**
(21) Application number: 18819965.7
(22) Date of filing: 05.04.2018
(51) Int. Cl.: B29C 64/20, B29C 64/135, B29C 64/286, B33Y 30/00

(54) **MODELING DEVICE AND OPTICAL HEAD UNIT**

(30) Priority: 19.06.2017 JP 2017119321
(71) Applicant: Sony Corporation, Tokyo 108-0075 (JP)
(72) Inventor: SATOU, Kei, Tokyo 108-0075 (JP)
(74) Representative: D Young & Co LLP
(86) International application number: PCT/JP2018/014587
(87) International publication number: WO 2018/235387

(57) **Abstract**

[Solving Means] A molding apparatus includes a stage, a regulation body, a light irradiation section, and a movement mechanism. The stage has a stage surface. The regulation body has a surface including a regulation surface facing to the stage surface and a photocatalyst layer arranged on the regulation surface. The regulation body regulates a position in a lamination direction of a material of a molded object to be formed on the stage surface by the regulation surface. The light irradiation section irradiates the material with light via the photocatalyst layer of the regulation body. The movement mechanism relatively moves the stage and the regulation body.

## Description

### Technical Field

The present technology relates to a molding apparatus that forms a three-dimensional molded object by laminating a material by using a regulation level method, and an optical head unit used therefor.

### Background Art

An optical molding apparatus described in Patent Literature 1 is a molding apparatus that forms a three-dimensional molded object by laminating resin by utilizing a regulation level method. Specifically, the optical molding apparatus includes a container that contains ultraviolet curing resin, and the container has a glass window that regulates a liquid surface of the ultraviolet curing resin. In addition, the optical molding apparatus includes a position regulation mechanism. The position regulation mechanism regulates a position of the glass window by applying a force to the glass window from below, which prevents the glass window from being deflected downward due to its own weight. As a result, the glass window becomes almost flat, surface accuracy of a cured layer is improved and lamination accuracy is improved (for example, see claim 1, specification paragraph [0029]).

### Citation List

### Patent Literature

Patent Literature 1: Japanese Patent Application Laid-open No. 2009-137048

### Disclosure of Invention

### Technical Problem

In general, in a molding method by the regulation level method, it needs to peel the cured layer from a regulation surface each time molding of each layer is ended. The greater a molding surface area of each layer is, the greater a force needed for peeling becomes. In this case, the molded object may be collapsed or the molded object may be peeled from a pedestal (stage on which molded object is laminating), which may results in a decreased yield.

On the other hand, if it takes longer time to do a peeling work, such a problem can be suppressed. However, in this case, there is a problem that a molding speed is lowered.

It is an object of the present disclosure to provide a molding apparatus that makes easy to peel the cured layer of the material from the regulation surface and that improves the molding speed, and an optical head unit used therefor.

### Solution to Problem

In order to achieve the above-described object, a molding apparatus according to an embodiment includes a stage, a regulation body, a light irradiation section, and a movement mechanism.

The stage has a stage surface.

The regulation body has a surface including a regulation surface facing to the stage surface and a photocatalyst layer arranged on the regulation surface. The regulation body regulates a position in a lamination direction of a material of a molded object to be formed on the stage surface by the regulation surface.

The light irradiation section irradiates the material with light via the photocatalyst layer of the regulation body.

The movement mechanism relatively moves the stage and the regulation body.

The photocatalyst layer is arranged on the regulation surface and the material is irradiated with light via the photocatalyst layer, resulting in generation of gas on a surface of the photocatalyst layer. As the gas suppresses curing of the material, the cured layer will be easily peeled from the regulation surface and the molding speed is improved.

The regulation surface may be planar surface.

The surface further includes an area other than the regulation surface and the regulation surface may be configured such that the regulation surface is arranged at a position closer to the stage than the area other than the regulation surface. And, the photocatalyst layer may be arranged on at least the regulation surface.

By regulating the material with the regulation surface having a regulation range of the material as narrow as possible, it becomes possible to peel the cured material more easily.

The light irradiation section may irradiate the material in a one-dimensional slit area between the regulation surface and the stage with light.

The photocatalyst layer may include a multi-layer structure made of a plurality of different materials. According to this structure, as light transmittance of the photocatalyst layer can be controlled, an amount of gas generated can be controlled. As a result, a force needed for peeling can be selectively designed.

The photocatalyst layer may at least one of titanium oxide or tantalum oxide.

The light irradiation section may irradiate with light having a wavelength of 450 nm or less.

A surface roughness of the photocatalyst layer may be 100 µm or less.

An optical head unit according to an embodiment is used for the molding apparatus and includes the regulation body and the light irradiation section.

### Advantageous Effects of Invention

As described above, according to the present technology, it makes easy to peel a resin cured layer from the regulation surface and the molding speed is improved.

It should be noted that the effects described here are not necessarily limitative and may be any of effects described in the present disclosure.

### Brief Description of Drawings

[Fig. 1] Fig. 1 is a diagram showing a molding apparatus according to an embodiment 1.
[Fig. 2] Fig. 2 is a diagram showing a structure of a molding apparatus according to an example 1 of an embodiment 2.
[Fig. 3] Fig. 3 is a diagram showing a structure of a molding apparatus according to an example 2 of an embodiment 2.
[Fig. 4] Fig. 4 is an enlarged cross-sectional diagram showing a photocatalyst layer according to an embodiment 3 as other embodiment.

### Mode(s) for Carrying Out the Invention

Hereinafter, an embodiment of the present disclosure will be described with reference to the drawings.

### 1. Embodiment 1

### 1. 1) Structure of molding apparatus

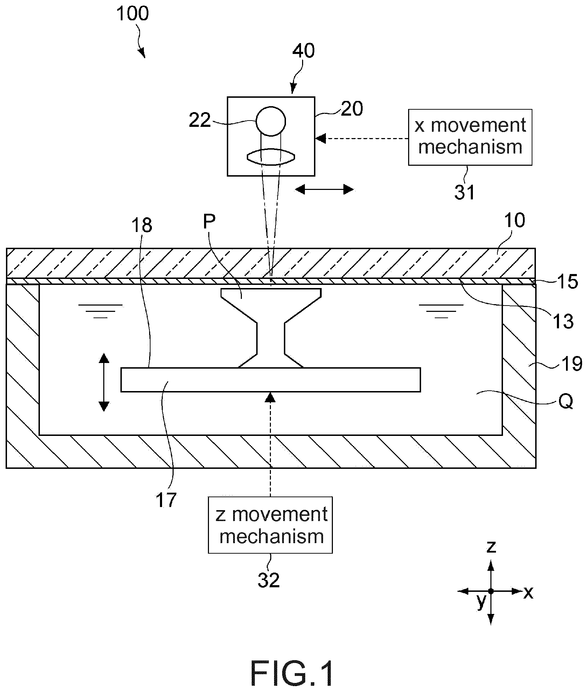

Fig. 1 is a diagram showing a molding apparatus according to an embodiment 1. A molding apparatus 100 includes a stage 17, a molding tank 19, and an optical head unit 40.

The molding tank 19 contains liquid photo-curing resin Q as a material of a molded object P. Hereinafter, the photo-curing resin Q is simply referred to as a "material" as much as possible. The material may be mixed with fine particles such as metal and ceramics that add a functionality to the material itself as well as a solvent and a photosensitive material.

The stage 17 has a stage surface 18 on which the molded object P is formed. The stage 17 is arranged in the molding tank 19 at least at the time of molding and is immersed into the material contained in the molding tank 19.

The optical head unit 40 can be arranged facing to the stage surface 18 of the stage 17. The optical head unit 40 has a light irradiation section 20 including a light source 22.

A regulation body 10 is arranged on an opening at a top of the molding tank 19. The regulation body 10 has a regulation surface 13 as a surface and a photocatalyst layer 15 arranged on the regulation surface 13. The regulation body 10 regulates a position of the material (position in a lamination direction thereof) of the molded object P to be formed on the stage surface 18 by the regulation surface 13. The regulation surface 13 is arranged at a side facing to the stage surface 18, i.e., at a lower surface side, of the regulation body 10.

In this embodiment, the photocatalyst layer 15 is substantially arranged on an entire surface of the regulation surface 13, but may be arranged within a wide range of the stage 17.

The regulation body 10 is formed in a flat-plate shape, for example, and the regulation surface 13 is formed in a planar surface, for example. The regulation body 10 is formed of a material that substantially transmits light from the light irradiation section 20 such as glass and an acrylic material. In a case where the photocatalyst layer 15 is arranged on a part of the regulation surface 13, the photocatalyst layer 15 may be arranged at a range that covers an area of the regulation surface 13 through which light from the light irradiation section 20 is transmitted.

The photocatalyst layer 15 is formed of a material including titanium oxide or tantalum oxide as a main component, for example. A thickness of the photocatalyst layer 15 is not especially limited and is set to an optimum value depending on light transmittance, manufacturability, costs, and the like. For example, the thickness is several µms to 1 mm.

A surface roughness (Rms) of the photocatalyst layer 15 is not especially limited and is set to several hundreds µm or less. As described later, since a lamination pitch of a cured layer of the material is made to be several hundreds µm or less, the surface roughness is preferably made to be lower than that. More preferably, the surface roughness is made to be 100 µm or less.

The light irradiation section 20 has a structure that an uncured material on the stage 17 (or cured layer) is irradiated with light via the photocatalyst layer 15 of the regulation body 10. The light is infrared light, visible light, or ultraviolet light and is not limited. Preferably, light having a peak wavelength of 450 nm or less is used. The wavelength of the light is used in a photolithography process in semiconductor manufacture.

As the light source 22 of the light irradiation section 20, an LED (Light Emitting Diode), an LD (Laser Diode), a CCFL (Cold Cathode Fluorescent Lighting (Lamp)), or the like is used.

The light irradiation section 20 typically has a line light source. A length direction of the line light source (direction along line) is matched with the y direction that is one direction of in-plane parallel to the stage surface 18. Further, the molding apparatus 100 includes an x movement mechanism 31 that moves the light irradiation section 20 in the x direction orthogonal to the y direction in the in-plane parallel to the stage surface 18. By the x movement mechanism 31, one cured layer of the material is formed each time the light irradiation section 20 is scanned.

Furthermore, the molding apparatus 100 includes a z movement mechanism 32 that moves the stage 17 in the z direction, i.e., a vertical direction. The z direction is matched with the lamination direction of the cured layer. The cured layer is laminated by lowering the stage 17 for a predetermined distance by the z movement mechanism 32 each time one cured layer is formed. According to this structure, the molded object P that is a cubic cured material is formed. The predetermined distance, i.e., a lamination pitch, is several tens µm to several hundreds µm, for example.

The x movement mechanism 31 and the z movement mechanism 32 constitute a "movement mechanism".

### 1. 2) Action of photocatalyst layer

When the material is irradiated with the light from the light irradiation section 20 via the photocatalyst layer 15, a gas, e.g., oxygen, is generated from the photocatalyst layer 15. Generation of oxygen suppresses a curing action of the material by light irradiation. A degree of suppression depends on an amount of oxygen. The curing action of the material is suppressed by oxygen generated on a surface of the photocatalyst layer 15, but the material directly thereunder is cured by a normal photo-curing action.

According to this structure, when the material is cured, distortion and deflection of the regulation surface 13 due to a contraction force applied to the regulation body 10 can be suppressed. In addition, when the cured layer of the material is peeled from the regulation body 10, tension applied to the regulation surface 13 received from the cured layer can be relaxed. As a result, the cured layer will be very easily peeled from the regulation surface 13 (photocatalyst layer 15).

In addition, easy peeling enhances planar accuracy of each cured layer and a thickness of each cured layer is controlled with high accuracy. According to this structure, the molded object P having a precise shape can be produced.

Furthermore, since the cured layer is easily peeled from the regulation body 10, a molding speed can be increased. In other words, a problem that the cured molded object P is broken upon rapid peeling is solved. While the yield is increased, the molding speed can be increased.

As a comparative embodiment of the present technology, there is a CLIP (Continuous Liquid Interface Production) by Carbon corp. According to the CLIP technology, a container that contains a resin material is provided at an outer surface with a window of an oxygen-permeable material, and the resin material is irradiated with light via the window. The window functions as the regulation surface. In this case, since the container is provided at the outer surface with the window of the oxygen-permeable material, oxygen in air enters into the resin material via an entire surface of the window. As a result, it does not need to peel the cured layer from the regulation surface and the molding speed is thus improved. However, oxidation of the resin material is promoted and degradation of the resin material is accelerated. Accordingly, the resin material cannot be reused and the costs become high.

In contrast, according to the present technology, since oxygen is generated only at the area with which light is irradiated, degradation of the resin with which the light is not irradiated around the irradiated area can be suppressed. The present technology is advantageous over the above-described comparative embodiment in that the area where oxygen is actively generated is selectable.

### 2. Embodiment 2

### 2. 1) Example 1

Next, a molding apparatus according to an embodiment 2 will be described. Substantially similar components, functions, and the like of the molding apparatus 100 according to the above-described embodiment 1 are denoted by the same reference numerals, and thus description thereof will be hereinafter simplified or omitted. Different points will be mainly described.

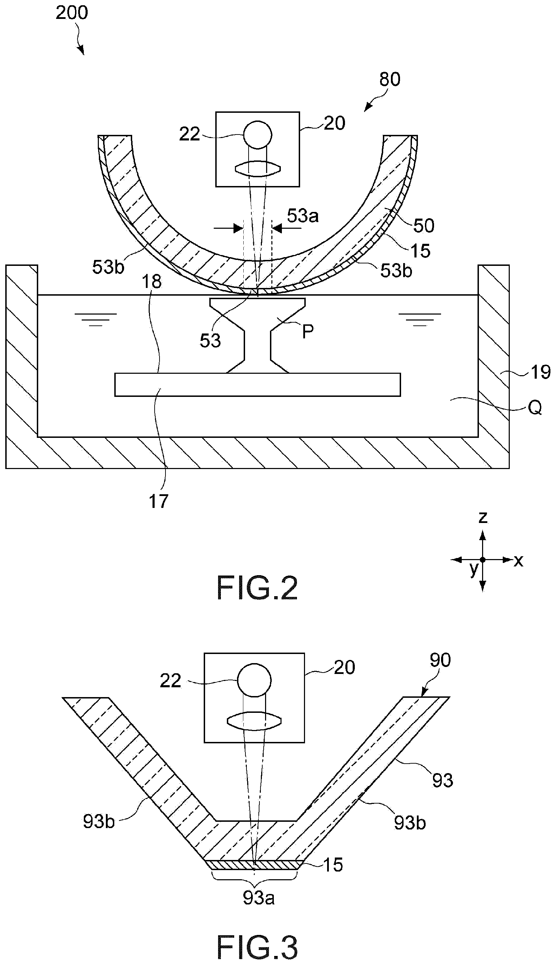

Fig. 2 is a diagram showing a structure of a molding apparatus 200 according to an example 1 of the embodiment 2. The optical head unit 80 includes a regulation body 50 and the light irradiation section 20 having the light source 22. For example, the light irradiation section 20 and the regulation body 50 are integrally supported by a support member or a connecting member (not shown) and is configured to be capable of integrally moving by the x movement mechanism 31 (see Fig. 1).

The photocatalyst layer 15 is arranged on the surface 53 that is an outer surface of the regulation body 50. The surface 53 includes a regulation surface 53a and an area 53b other than that. The regulation body 50 is configured such that the regulation surface 53a is arranged at the position closer to the stage 17 than the area 53b other than the regulation surface. Specifically, the regulation surface 53a including the surface 53 has a curved surface. For example, the regulation body 50 has a part of a cylindrical shape, e.g., a half cylindrical shape.

The light irradiation section 20 irradiates a material with light in a one-dimensional slit area between the regulation surface 53a and the stage 17 (or cured layer on stage 17). The one-dimensional direction is an axial direction of the semi cylindrical regulation body 50, i.e., a direction along the y axis.

In this embodiment, the regulation range of the material is limited to the regulation surface 53a as narrow as possible. This allows a surface area of a contact area between the cured layer and the regulation surface 53a to be small and a contraction force when the material is cured has a small impact on the regulation surface 53a. As a result, it becomes possible to produce the molded object P with high accuracy. In addition, since the contact area is small, the cured material can be peeled more easily, the molding speed is increased, and the yield is increased.

### 2. 2) Example 2

Fig. 3 is a diagram showing a structure of a molding apparatus according to an example 2 of an embodiment 2. A regulation body 90 has a triangle shape or a trapezoid shape. A surface 93 that is an outer surface of the regulation body 90 has a regulation surface 93a arranged so as to be closest to the stage and an area 93b other than that. At least, the regulation surface 93a has a flat surface. The photocatalyst layer 15 is arranged only on the regulation surface 93a, but the photocatalyst layer 15 may be arranged on an entire surface of the surface 93.

Also, with the molding apparatus according to the example 2, the effects similar to the above-described example 1 can be provided.

### 3. Embodiment 3

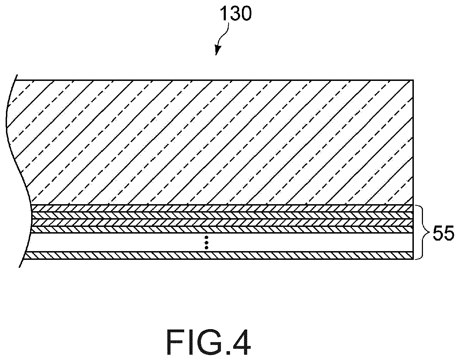

Fig. 4 is an enlarged cross-sectional diagram showing a photocatalyst layer according to an embodiment 3 as other embodiment. A photocatalyst layer 55 of a regulation body 130 includes a multi-layer structure made of a plurality of different materials. The photocatalyst layer 15 includes titanium oxide and tantalum oxide alternately arranged, for example. The number of layers is 3 or more. For example, there are several layers to twenty layers.

Since refractive indices of materials in the respective layers are different, light transmittance of the photocatalyst layer 55 can be controlled by the number of layers and the thickness of each layer. According to this structure, an amount of gas generated by light irradiation can be controlled. As a result, a force needed for peeling can be selectively designed.

### 4. Modification

The present technology is not limited to the above-described embodiments. For example, in the above-described embodiment 2, the light irradiation section 20 and the regulation body 50 are integrally supported. However, these may not necessarily be integrated and may be configured to be moved by separate movement mechanisms.

In the above-described each embodiment, instead of moving the optical head unit 40, 80 in the x direction by the x movement mechanism 31, the movement mechanism of the stage 17 may be configured to move the stage 17 not only in the z direction but in the x direction.

In the embodiment 2, the regulation body has a cylindrical shape, a trapezoid shape, or the like. However, the surface of the regulation body may be a quadric surface such as an oval surface and a paraboloid surface or may be a combined surface of a curved surface and a planar surface.

The light irradiation section 20 includes the line light source as the light source 22. However, the light irradiation section may include a point light source and may have a mechanism that scan light from the point light source on a material in the y direction.

It is possible to combine at least two features of the respective embodiments described above.

The present technology may also have the following structures.
(1) A molding apparatus, including:
   a stage having a stage surface;
   a regulation body having a surface including a regulation surface facing to the stage surface and a photocatalyst layer arranged on the regulation surface, the regulation body regulating a position in a lamination direction of a material of a molded object to be formed on the stage surface by the regulation surface;
   a light irradiation section that irradiates the material with light via the photocatalyst layer of the regulation body; and
   a movement mechanism that relatively moves the stage and the regulation body.
(2) The molding apparatus according to (1), in which
   the regulation surface is a planar surface.
(3) The molding apparatus according to (1), in which
   the surface further includes an area other than the regulation surface,
   the regulation surface is configured such that the regulation surface is arranged at a position closer to the stage than the area other than the regulation surface, and
   the photocatalyst layer is arranged on at least the regulation surface.
(4) The molding apparatus according to (3), in which
   the light irradiation section irradiates the material in a one-dimensional slit area between the regulation surface and the stage with light.
(5) The molding apparatus according to any one of (1) to (4), in which
   the photocatalyst layer includes a multi-layer structure made of a plurality of different materials.
(6) The molding apparatus according to any one of (1) to (5), in which
   the photocatalyst layer includes at least one of titanium oxide or tantalum oxide.
(7) The molding apparatus according to any one of (1) to (6), in which
   the light irradiation section irradiates with light having a wavelength of 450 nm or less.
(8) The molding apparatus according any one of (1) to (7), in which
   a surface roughness of the photocatalyst layer is 100 µm or less.
(9) An optical head unit used for a molding apparatus that includes a stage having a stage surface and the optical head unit arranged facing to the stage, including:
   a regulation body having a surface including a regulation surface facing to the stage surface and a photocatalyst layer arranged on the regulation surface, the regulation body regulating a position in a lamination direction of a material of a molded object to be formed on the stage surface by the regulation surface; and
   a light irradiation section that irradiates the material with light via the photocatalyst layer of the regulation body.

### Reference Signs List

- 10, 50, 90, 130: regulation body
- 13: regulation surface
- 15, 55: photocatalyst layer
- 17: stage
- 18: stage surface
- 20: light irradiation section
- 31: x movement mechanism
- 32: z movement mechanism
- 40, 80: optical head unit
- 53, 93: surface
- 53a, 93a: regulation surface
- 53b, 93b: area other than regulation surface
- 100, 200: molding apparatus

## Claims

1. A molding apparatus, comprising:
a stage having a stage surface;
a regulation body having a surface including a regulation surface facing to the stage surface and a photocatalyst layer arranged on the regulation surface, the regulation body regulating a position in a lamination direction of a material of a molded object to be formed on the stage surface by the regulation surface;
a light irradiation section that irradiates the material with light via the photocatalyst layer of the regulation body; and
a movement mechanism that relatively moves the stage and the regulation body.

2. The molding apparatus according to claim 1, wherein
the regulation surface is a planar surface.

3. The molding apparatus according to claim 1, wherein
the surface further includes an area other than the regulation surface,
the regulation surface is configured such that the regulation surface is arranged at a position closer to the stage than the area other than the regulation surface, and
the photocatalyst layer is arranged on at least the regulation surface.

4. The molding apparatus according to claim 3, wherein
the light irradiation section irradiates the material in a one-dimensional slit area between the regulation surface and the stage with light.

5. The molding apparatus according to claim 1, wherein
the photocatalyst layer includes a multi-layer structure made of a plurality of different materials.

6. The molding apparatus according to claim 1, wherein
the photocatalyst layer includes at least one of titanium oxide or tantalum oxide.

7. The molding apparatus according to claim 1, wherein
the light irradiation section irradiates with light having a wavelength of 450 nm or less.

8. The molding apparatus according to claim 1, wherein
a surface roughness of the photocatalyst layer is 100 µm or less.

9. An optical head unit used for a molding apparatus that includes a stage having a stage surface and the optical head unit arranged facing to the stage, comprising:
a regulation body having a surface including a regulation surface facing to the stage surface and a photocatalyst layer arranged on the regulation surface, the regulation body regulating a position in a lamination direction of a material of a molded object to be formed on the stage surface by the regulation surface; and
a light irradiation section that irradiates the material with light via the photocatalyst layer of the regulation body.
